(19) Europäisches Patentamt
European Patent Office
Office européen des brevets

(11) **EP 2 213 361 A1**

(12) **EUROPÄISCHE PATENTANMELDUNG**

(43) Veröffentlichungstag:
**04.08.2010 Patentblatt 2010/31**

(51) Int Cl.:
***B01D 53/00*** (2006.01)   ***B01D 53/04*** (2006.01)
***F25J 3/06*** (2006.01)

(21) Anmeldenummer: **09016093.8**

(22) Anmeldetag: **29.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **08.01.2009   DE 102009004106**

(71) Anmelder: **Linde Aktiengesellschaft**
**80331 München (DE)**

(72) Erfinder:
  • **Wolf, Stefan, Dr.**
    **85540 Haar (DE)**

  • **Lee, Ron C., Dr.**
    **Bloomsbury**
    **New Jersey (US)**

(74) Vertreter: **Zahn, Christoph et al**
    **Linde AG**
    **Legal Services Intellectual Property**
    **Dr.-Carl-von-Linde-Strasse 6-14**
    **82049 Pullach (DE)**

Bemerkungen:
    Geänderte Patentansprüche gemäss Regel 137(2) EPÜ.

(54)   **Abtrennen flüchtiger Komponenten aus einem Gasstrom**

(57)   Es wird ein Verfahren zum Abtrennen flüchtiger organischer und/oder gasförmiger anorganischer Bestandteile aus einem flüchtige organische und/oder gasförmige anorganische Bestandteile enthaltenden Gasgemisch beschrieben,
- wobei dieses einem der Abtrennung der flüchtigen organischen und/oder gasförmiger anorganischer Bestandteile dienendem Kryokondensationsprozess und anschließend einem der Abtrennung der flüchtigen organischen und/oder gasförmigen anorganischen Bestandteile dienendem Adsorptionsprozess unterworfen wird,

- wobei der Adsorptionsprozess in wenigstens zwei parallel angeordneten Adsorbern, die abwechselnd Adsorption- und Desorptionsphasen durchlaufen erfolgt und
- das während einer Desorptionsphase durch einen Adsorber geführte, mit flüchtigen organischen und/oder gasförmiger anorganischer Bestandteile beladene Regeneriergas zumindest teilweise dem flüchtige organische und/oder gasförmige anorganische Bestandteile enthaltenden Gasgemisch vor dessen Zuführung in den Kryokondensationsprozess zugemischt wird.
    Erfindungsgemäß variiert die innerhalb des Kryokondensationsprozesses (CU) realisierte Kondensationstemperatur (T-CUx).

Fig. 1

## Beschreibung

Die Erfindung betrifft ein Verfahren zum Abtrennen flüchtiger organischer und/oder gasförmiger anorganischer Bestandteile aus einem flüchtige organische und/oder gasförmige anorganische Bestandteile enthaltenden Gasgemisch,

-   wobei dieses einem der Abtrennung der flüchtigen organischen und/oder gasförmigen anorganischer Bestandteile dienendem Kryokondensationsprozess und anschließend einem der Abtrennung der flüchtigen organischen Bestandteile dienendem Adsorptionsprozess unterworfen wird,
-   wobei der Adsorptionsprozess in wenigstens zwei parallel angeordneten Adsorbern, die abwechselnd Adsorption- und Desorptionsphasen durchlaufen erfolgt und
-   das während einer Desorptionsphase durch einen Adsorber geführte, mit flüchtigen organischen und/oder gasförmigen anorganischen Bestandteilen beladene Regeneriergas zumindest teilweise dem flüchtige organische und/oder gasförmige anorganische Bestandteile enthaltenden Gasgemisch vor dessen Zuführung in den Kryokondensationsprozess zugemischt wird.

Unter dem Begriff "flüchtige organische Bestandteile" sind gemäß der Definition der WHO alle organischen Verbindungen mit Siedepunkten im Temperaturbereich von 50 bis 260 °C zu verstehen. In Deutschland wird in der 31. BlmschV ein organischer Bestandteil als flüchtig bezeichnet, wenn er bei einer Temperatur von 293,15 K einen Dampfdruck von wenigstens 0,01 Kilopascal oder unter den jeweiligen Verwendungsbedingungen eine entsprechende Flüchtigkeit aufweist. Lediglich beispielhaft genannt seien Lösungsmittel, wie bspw. Aceton, Toluol, Dichlormethan und Methanol. Gasförmige anorganische Stoffe sind z.B. Chlorwasserstoff, Bromwasserstoff und Ammoniak.

Gattungsgemäße Verfahren zum Abtrennen flüchtiger organischer und/oder gasförmiger anorganischer Bestandteile aus einem Gasgemisch kommen bei einer Vielzahl von Anwendungsfällen zum Einsatz. Beispielsweise bei der Rückgewinnung flüchtiger organischer und/oder gasförmiger anorganischer Bestandteile aus dem Abgas von Tankwägen, das während der Befüllvorgänge derartiger Tankwägen anfällt. Aufgrund entsprechend strenger Auflagen bzw. gesetzlicher Regelungen ist es erforderlich, den Anteil flüchtiger organischer und/oder gasförmiger anorganischer Bestandteile in derartigen (Ab)Gasgemischen auf einen Gehalt von bspw. unterhalb von 20 mg/Nm$^3$ zu reduzieren. In Deutschland sind in der TA Luft die je nach Stoffklasse unterschiedlichen Grenzwerte gesetzlich festgelegt.

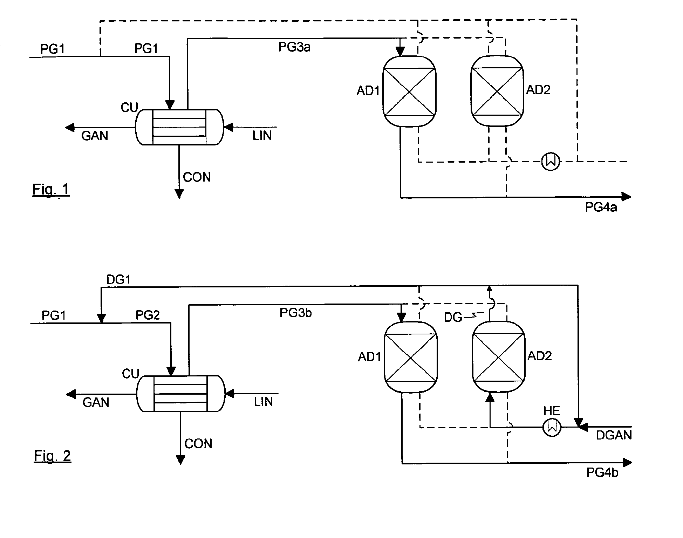

Gattungsgemäße Verfahren sowie das erfindungsgemäße Verfahren zum Abtrennen flüchtiger organischer und/oder gasförmiger anorganischer Bestandteile aus einem Gasgemisch seien nachfolgend anhand des in den Figuren 1 und 2 dargestellten Ausführungsbeispieles näher erläutert.

Das flüchtige organische und/oder gasförmige anorganische Bestandteile enthaltende Gasgemisch - im Folgenden als PG1-Strom bezeichnet-wird, wie in der Figur 1 dargestellt, einem Kryokondensationsprozess CU zugeführt. In derartigen Kryokondensationsprozessen erfolgt eine ein- oder mehrstufige Abkühlung des Gasgemisches auf eine Temperatur, bei der die zu entfernenden, flüchtigen organischen und/oder gasförmigen anorganischen Bestandteile kondensieren. Das innerhalb des Kryokondensationsprozesses anfallende Kondensat - im Folgenden als CON-Strom bezeichnet - wird aus dem Kryokondensationsprozess abgezogen und verworfen oder ggf. einer weiteren Behandlung unterzogen.

Das Abkühlen des PG1-Stromes erfolgt in einem oder mehreren Wärmetauschern gegen ein oder mehrere Kältemittel und/oder Kältemittelgemische. Dies bzw. diese werden in den Figuren 1 und 2 als LIN-Strom bezeichnet. Der aus dem Kryokondensationsprozess abgezogene, angewärmte Kältemittel(gemisch)strom wird als GAN-Strom bezeichnet. Im Regelfall werden als Kältemittel entweder kryogener gasförmiger Stickstoff oder flüssiger Stickstoff verwendet. Im Falle einer in den Figuren 1 und 2 nicht dargestellten Vorkühlung des PG1-Stromes kann ggf. auch der aus dem Kryokondensationsprozess abgezogene, gereinigte Strom - im Folgenden als PG3a-bzw. PG3b-Strom bezeichnet - herangezogen werden.

Der aus dem Kryokondensationsprozess abgezogene PG3a-Strom weist gegenüber dem PG1-Strom einen wesentlich niedrigeren Anteil an flüchtigen organischen und/oder gasförmigen anorganischen Bestandteilen auf. Seine Zusammensetzung hängt sowohl von der Zusammensetzung des PG1-Stromes als auch von Druck sowie Temperatur innerhalb des Kryokondensationsprozesses ab. Da die Einhaltung strenger Vorgaben bezüglich der Anteile an flüchtigen organischen und/oder gasförmigen anorganischen Bestandteilen durch das ausschließliche Vorsehen eines Kryokondensationsprozesses im Regelfall nicht erreicht werden kann, wird eine adsorptive Nachreinigung des aus dem Kryokondensationsprozesses abgezogenen PG3a-Stromes realisiert. Die hierfür verwendeten Adsorptionsprozesse weisen zwei oder mehr, parallel angeordnete Adsorber AD1 und AD2 auf. Als Adsorptionsmittel kommen Aktivkohle, Zeolite und/oder aktivierte Aluminiumoxide zum Einsatz. Mittels des dem Kryokondensationsprozess nachgeschalteten Adsorptionsprozesses ist es möglich, annähernd 100 % der flüchtigen organischen und/oder gasförmigen anorganischen Bestandteile aus dem PG1- bzw. PG3a/b-Strom zu entfernen.

Wie in der Figur 1 dargestellt, wird der PG3a-Strom solange durch den Adsorber AD1 geführt, bis dessen Adsorptionsmittel vollständig beladen ist. Während der Adsorptionsphase im Adsorber AD1 wird das von flüchtigen organischen und/oder gasförmigen anorganischen Bestandteilen gereinigte Gasgemisch - im Folgenden als PG4a-Strom bezeichnet - abgezogen und seiner weiteren Verwendung zugeführt. Die vergleichsweise niedrige Temperatur des PG3a/b-Stromes ist für eine effiziente Adsorption der flüchtigen organischen und/oder gasförmigen anorganischen Bestandteile von Vorteil. Sobald nach Ablauf der Gesamtadsorptionszeit TAT die Kapazität des Adsorbers AD1 erschöpft ist, wird die Zuführung des PG3a-Stromes zum Adsorber AD1 gestoppt und nunmehr der PG3a-Strom dem Adsorber AD2 zugeführt. Zuvor muss der beladene Adsorber AD2 jedoch regeneriert werden. Dies ist in der Figur 2 dargestellt.

Ein geeigneter Regeneriergasstrom - im Folgenden als DGAN-Strom bezeichnet - wird, vorzugsweise in Gegenrichtung zu der während der Adsorptionsphase herrschenden Strömungsrichtung durch den Adsorber AD2 geführt. Als Regeneriergas kommt im Regelfall ein Inertgas, wie bspw. Stickstoff, zur Anwendung. Der DGAN-Strom wird mittels einer Heizvorrichtung HE, die dem Adsorber AD2 in Strömungsrichtung des DGAN-Stromes vorgeschaltet ist, erhitzt. Der in den Adsorber AD2 eintretende DGAN-Strom weist üblicherweise eine Temperatur zwischen 50 und 200 °C auf. Diese Desorptionstemperatur hängt u. a. von dem Desorptionsverhalten der organischen und/oder gasförmigen anorganischen Bestandteile und dem eingesetzten Adsorptionsmittel ab.

Durch das Aufheizen des zu regenerierenden Adsorptionsmittels werden die adsorbierten flüchtigen organischen und/oder gasförmigen anorganischen Bestandteile desorbiert und mit dem aus dem Adsorber AD2 austretenden Regeneriergasstrom, der nach dem Austritt aus dem Adsorber AD2 im Folgenden als DG-Strom bezeichnet wird, mitgeführt. Ein Teil des DG-Stromes kann, wie in der Figur 2 dargestellt, vor den Adsorber AD2 zurückgeführt und dem DGAN-Strom vor dem Erhitzer HE zugemischt werden. Diese Verfahrensweise ermöglicht es, den Adsorber AD2 in kurzer Zeit auf die erforderliche Desorptionstemperatur durch den Kreislaufprozess zu bringen, da das Kreislaufgas kontinuierlich durch die Heizvorrichtung HE erhitzt wird. Durch den Kreislaufprozess kann mit einem kleinen DGAN-Strom gefahren werden, was zu niedrigen Betriebskosten für die Regeneration führt.

Um die Massenbilanz auszugleichen, muss ein Teilstrom des DG-Stromes - der im Folgenden als DG1-Strom bezeichnet wird - vor den Kryokondensationsprozess zurückgeführt werden. Während der Desorptionsphase des Adsorbers AD2 wird der DG1-Strom daher mit dem PG1-Strom vermischt. Der vermischte Strom wird im Folgenden als PG2-Strom gezeichnet. Die Zurückführung des DG1-Stromes vor den Kryokondensationsprozess wird während der Desorptionszeit DT solange fortgesetzt, bis der Adsorber AD2 vollständig regeneriert und im Wesentlichen frei von flüchtigen organischen und/oder gasförmigen anorganischen Verbindungen ist. Nach Beendigung der Desorptionsphase wird der Adsorber AD2 auf die für die nachfolgende Adsorptionsphase benötigte niedrige Temperatur abgekühlt. Dies geschieht beispielsweise durch Überleiten von flüssigem Stickstoff über das zuvor regenerierte Adsorptionsbett des Adsorbers AD2.

Im Regelfall werden die Adsorption sowie die Desorption zeitkontrolliert. Nach Beendigung der vollständigen Adsorptionszeit TAT wird der PG3a/b-Strom, der zunächst dem Adsorber AD1 zugeführt wird, auf den zweiten Adsorber AD2 umgeleitet. Gleichzeitig beginnt die Desorptionsphase für den beladenen Adsorber AD1. Es ist offensichtlich, dass der vorbeschriebene Adsorptionsprozess nur dann funktionieren kann, wenn die Desorptionszeit DT kürzer ist, als die vollständige Adsorptionszeit TAT. Beide Zeiten DT und TAT werden von einer Vielzahl von Parametern beeinflusst, wie bspw. Temperatur, Druck, Art der flüchtigen organischen und/oder gasförmigen anorganischen Bestandteile, Zusammensetzung des Gasgemisches PG1, etc.

Während ein Adsorber die Adsorptionsphase TAT durchläuft, werden zwei Verfahrensweisen unterschieden. Zunächst wird dem Adsorptionsprozess lediglich der PG3a-Strom zugeführt. Während dieser Zeit findet im Adsorber AD2 keine Desorption statt. Wird der zweite Adsorber AD2 regeneriert, wird dem Adsorber AD1 der PG3b-Strom zugeführt. Letzterer setzt sich aus dem den Kryokondensationsprozess zugeführten Strömen PG1 und DG1 zusammen. Die Zeitdauer der vorbeschriebenen ersten Adsorptionsphase, während derer keine Regenerierung stattfindet, sei im Folgenden als AT1 bezeichnet, während diejenige Adsorptionszeit, während der eine Regenerierung stattfindet, als AT2 bezeichnet wird. Hierbei gilt: AT2 = DT.

Die vorbeschriebene Verfahrenskombination aus Kryokondensationsprozess und Adsorptionsprozess funktioniert jedoch nur dann, wenn die Adsorptionskapazität des in der Adsorptionsphase befindlichen Adsorbers nicht innerhalb der Adsorptionszeit TAT bereits erschöpft ist. Wäre dies der Fall, würden die flüchtigen organischen und/oder gasförmigen anorganischen Bestandteile des zu reinigenden Gasgemisches durch den in der Adsorptionsphase befindlichen Adsorber durchbrechen. Die Konzentration an flüchtigen organischen und/oder gasförmigen anorganischen Bestandteilen im PG4a-bzw. PG4b-Strom darf jedoch die zulässigen Grenzwerte nicht überschreiten. Sobald dies der Fall wäre, müsste der Prozess unterbrochen werden. Da derartige Prozesse oftmals in Befüll- bzw. Produktionsanlagen integriert sind, hätte ein Abschalten dieser Teilanlagen zur Folge, sodass unter Umständen die gesamte Anlage stillgelegt werden müsste.

Das Gesamtverfahren wird wesentlich von dem realisierten Kryokondensationsprozess bestimmt. Insbesondere die erzielte Kondensationstemperatur T-CU bestimmt die Menge der kondensierten flüchtigen organischen und/oder gasförmigen anorganischen Bestandteile sowie die Menge dieser Bestandteile, die mit dem PG3a/b-Strom dem Adsorptionsprozess zugeführt werden. Üblicherweise liegen die Kondensationstemperaturen von Kryokondensationsprozessen zwischen -40 und -160 °C.

Wird die Kondensationstemperatur zu hoch gewählt, hat dies zur Folge, dass sich die flüchtigen organischen und/oder gasförmigen anorganischen Bestandteile während des Prozesses im PG3a/b-Strom anreichern. Dies wiederum hat zur Folge, dass der in Adsorption befindliche Adsorber zu schnell beladen wird. Da die Adsorptionszeit TAT vorgegeben ist, wird die maximale Kapazität des Adsorbers vor Ablauf der Adsorptionszeit TAT erreicht und es kommt zu einem Durchbruch der flüchtigen organischen und/oder gasförmigen anorganischen Bestandteile durch den Adsorber. Die Zusammensetzung des PG3a/b-Stromes wird im Wesentlichen durch die gewählte Kondensationstemperatur bestimmt. Aber auch die Zusammensetzung des PG1-Stromes, die im Regelfall vorgegeben ist, sowie die Zusammensetzung des DG1-Stromes beeinflussen die Zusammensetzung des PG3a/b-Stromes. Dieser Sachverhalt sei nachfolgend anhand des Beispieles 1 erläutert; hierbei steht die Abkürzung VC für die in dem zu reinigenden Gasgemisch enthaltenen flüchtigen organischen und/oder gasförmigen anorganischen Bestandteile.

Beispiel 1:

PG1 enthält 2 kg/h VCs. DG1 = 0. Somit strömen 2 kg/h VCs in den Kryokondensationsprozess CU. 50 % der VCs werden bei einer Kondensationstemperatur T-CU kondensiert. Somit strömen 1 kg/h VCs in den Adsorber AD1, in dem sie vollständig adsorbiert werden. Die maximale Kapazität von AD1 beträgt 12 kg VCs, was einer Adsorptionszeit TAT von 12 h entspricht.
DT (= AT2) beträgt 6 h. DG1 enthält 2 kg/h VCs um 12 kg VCs aus den Adsorber AD2 innerhalb von 6 h desorbieren zu können. Während der 6h-Desorption enthält PG2 somit 3 kg/h VCs (zusammengesetzt aus 1 kg/h VCs in PG1 und 2 kg/h VCs in DG1). 1,5 kg/h VCs gelangen in AD1; dies bedeutet 50 %-Abscheidungsrate der VCs in CU. Nach 6 h Desorption sind 9 kg VCs im AD1 adsorbiert. Die verbleibende Kapazität von AD1 beträgt 3 kg VCs für die 6 h-Adsorptionszeit AT1 für PG3a. Somit erfolgt ein Durchbruch der VCs bereits nach 3 h Adsorption von PG3a.

Eine Anreicherung der flüchtigen organischen und/oder gasförmigen anorganischen Bestandteile kann nur dadurch vermieden werden, dass eine niedrigere Kondensationstemperatur T-CU gewählt wird. Um die erforderliche niedrigste Kondensationstemperatur T-CU zu bestimmen, wird ein sog. Worst-Case-Szenario angenommen. Dieses tritt dann ein, wenn der DG1-Strom lediglich aus dem eigentlichen Regeneriergas und einer Komponente VC1 besteht. Die Komponente VC1 sei hierbei derjenige flüchtige organische und/oder gasförmige anorganische Bestandteil mit dem höchsten Dampfdruck aller in dem zu reinigenden Gasgemisch PG1 enthaltenen flüchtigen organischen und/oder gasförmigen anorganischen Bestandteile. Dieser DG1-Strom wird vor der Zuführung in den Kryokondensationsprozess CU mit dem PG1-Strom zum PG2-Strom vermischt. Nun wird der durchschnittliche Strom der VCs des PG3a/b-Stromes zum Adsorber AD1 während der Adsorptionsphase TAT berechnet. Im Falle des vorgenannten Beispieles 1 wären dies 12 kg VC (maximale Kapazität des Adsorbers AD1) innerhalb der 12-stündigen Adsorptionszeit TAT. Der durchschnittliche Strom der VCs des PG3b-Stromes beträgt 1 kg/h während der Adsorptionsphase AT2.

Zuletzt wird die Kondensationstemperatur T-CU für den PG3b-Strom im Falle des Worst-Case-Szenarios bestimmt, um den maximal zulässigen Massenstrom von VC des PG3b-Stromes zum Adsorber AD1 zu unterschreiten, der in diesem Fall ≤ 1 kg/h VC sein muss. Während der Zeit, zu der kein DG1-Strom vor den Kryokondensationsprozess zurückgeführt wird, strömt lediglich der PG1-Strom in den Kryokondensationsprozess. Bei einer Kondensationstemperatur T-CU ist der Massenstrom der VC des PG3a-Stromes zum Adsorber AD1 geringer als 1 kg/h, da im Worst-Case-Szenario der PG1-Strom einen geringeren Anteil an der Komponente VC1 enthält als der PG2-Strom. Dies führt im Ergebnis zu einem durchschnittlichen Massenstrom der VCs zum Adsorber AD1 während der Adsorptionsphase TAT, der geringer ist, als der zulässige durchschnittliche Massenstrom der VCs. Somit kann der Gesamtprozess ohne Probleme ablaufen.

Üblicherweise wird die gewählte Kondensationstemperatur T-CU während der gesamten Adsorptionsphase TAT konstant gehalten. Sofern der PG1-Strom einen großen Anteil an leicht verflüchtigenden organischen und/oder gasförmigen anorganischen Bestandteilen VC1 enthält, wird eine vergleichsweise niedrige Kondensationstemperatur benötigt, um einen niedrigen Massenstrom von VCs in den PG3a-Strom einhalten zu können. Um derart niedrige Kondensationstemperaturen zu erreichen, sind größere Kühlmittelmengen erforderlich. Dies verursacht höhere Betriebskosten, insbesondere dann, wenn das verdampfte Kältemittel nicht erneut oder für andere Zwecke verwendet werden kann.

Darüber hinaus fördert eine niedrige Kondensationstemperatur die unerwünschte Eisbildung in dem bzw. den Wärmetauschern des Kondensationsprozesses. Diese Eisbildung wird durch diejenigen Komponenten verursacht, deren Schmelzpunkte oberhalb der gewählten Kondensationstemperatur liegen. Das gebildete Eis verringert jedoch den Wärmeübergang in dem bzw. den Wärmetauschern. Dadurch wird ggf. die erforderliche Kühlleistung nicht erreicht und die gewünschte Kondensationstemperatur kann nicht eingehalten werden. Als Folge davon steigt der Anteil der VCs in dem dem Adsorber AD1 zugeführten PG3a/b-Strom an.

Darüber hinaus erhöht die vorbeschriebene Eisbildung den Druckabfall über den Kryokondensationsprozess. Der Durchfluss des PG1/2-Stromes durch den bzw. die Wärmetauscher des Kryokondensationsprozesses nimmt ab und wird im ungünstigsten Falle sogar unterbrochen. Um dies zu vermeiden, müssen zur Sicherstellung eines kontinuierlichen Prozesses redundante Wärmetauscher vorgesehen werden. Während der bzw. die in Betrieb befindlichen Wärmetauscher der Reinigung des PG1/2-Stromes dienen, können die außer Betrieb befindlichen Wärmetauscher entfrostet und anschließend erneut abgekühlt werden. Eine derartige Verfahrensweise führt jedoch zu deutlich höheren Investitions- und Betriebskosten.

Aufgabe der vorliegenden Erfindung ist es, ein gattungsgemäßes Verfahren zum Abtrennen flüchtiger organischer und/oder gasförmiger anorganischer Bestandteile aus einem Gasgemisch anzugeben, das die vorgenannten Nachteile vermeidet.

Zur Lösung dieser Aufgabe wird ein gattungsgemäßes Verfahren zum Abtrennen flüchtiger organischer und/oder gasförmiger anorganischer Bestandteile aus einem Gasgemisch vorgeschlagen, das dadurch gekennzeichnet ist, dass die innerhalb des Kryokondensationsprozesses realisierte Kondensationstemperatur variiert.

Weitere vorteilhafte Ausgestaltungen des erfindungsgemäßen Verfahrens zum Abtrennen flüchtiger organischer und/oder gasförmiger anorganischer Bestandteile aus einem Gasgemisch, die Gegenstände der abhängigen Patentansprüche darstellen, sind **dadurch gekennzeichnet, dass**

- die innerhalb des Kryokondensationsprozesses realisierte Kondensationstemperatur durch die Menge der in dem mit flüchtigen organischen und/oder gasförmigen anorganischen Bestandteilen beladenen Regeneriergas enthaltenen flüchtigen organischen und/oder gasförmigen anorganischen Bestandteilen bestimmt wird,

- die innerhalb des Kryokondensationsprozesses realisierte Kondensationstemperatur neben dem Parameter "Menge der in dem Regeneriergas enthaltenen flüchtigen organischen und/oder gasförmigen anorganischen Bestandteilen" von wenigstens einem weiteren Verfahrensparameter, wie bspw. Druck, Temperatur, Art der flüchtigen organischen und/oder gasförmigen anorganischen Bestandteile, Zusammensetzung des Gasgemisches, etc., bestimmt wird, und

- die innerhalb des Kryokondensationsprozesses realisierte Kondensationstemperatur während einer in dem Adsorptionsprozess realisierten Adsorptionsphase ein- oder mehrmalig verändert wird.

Erfindungsgemäß wird die innerhalb des Kryokondensationsprozesses realisierte Kondensationstemperatur nunmehr während der Adsorptionsphase TAT nicht mehr konstant niedrig gehalten, sondern variiert. Diese zeitabhängige, flexible Kondensationstemperatur sei nachfolgend mit T-CUx bezeichnet. Sie wird bspw. durch die am Eintritt des Kryokondensationsprozesses herrschende Zusammensetzung des PG1/2-Stromes bestimmt. Die flexible Kondensationstemperatur T-CUx kann während einer Adsorptionsphase TAT ein- oder mehrmalig verändert werden. So können bspw. während der Zuführung des PG3a- und des PG3b-Stromes - also während der Adsorptionsphasen TA1 und TA2 - unterschiedliche Kondensationstemperaturen realisiert werden. Wird die Kondensationstemperatur verändert, muss sichergestellt sein, dass der durchschnittliche Massenstrom der flüchtigen organischen und/oder gasförmigen anorganischen Bestandteile (VCs) in dem dem Adsorptionsprozess zugeführten Strom niedriger ist als der zulässige durchschnittliche Massenstrom der VCs, der benötigt wird, um den Adsorptionsprozess kontinuierlich zu betreiben.

Das erfindungsgemäße Verfahren zum Abtrennen flüchtiger organischer und/oder gasförmiger anorganischer Bestandteile aus einem Gasgemisch sei nachfolgend anhand der Beispiele 2 und 3 näher erläutert.

Beispiel 2

| Adsorptionskapazität von AD1/2: | 3,6 kg VCs |
|---|---|
| Vollständige Adsorptionszeit TAT: | 12 h |
| Adsorptionszeit AT1 und AT2: | jeweils 6 h |
| Desorptionszeit: | 6 h |
| Volumenstrom von PG1: | 150 Nm$^3$/h |
| Temperatur von PG1: | 25 °C |
| Druck von PG1: | 1 bar(a) |

| PG1-Komponenten | Massenstrom | Schmelzpunkt | Dampfdruck (25°C) |
|---|---|---|---|
| Stickstoff $N_2$ | 187,0 kg/h | | |
| Chlorwasserstoff HCl | 0,2 kg/h | -114,8°C | 0,4 bar(a) |
| Dichlormethan DCM | 1,0 kg/h | - 96,7 °C | 47,9 bar(a) |

Wie oben erläutert, wird die niedrigste Kondensationstemperatur T-CUx dann benötigt, wenn der DG1-Strom ausschließlich aus dem Regeneriergas- bzw. DGAN-Strom und der VC-Komponenten mit dem höchsten Dampfdruck besteht. Im Beispiel 2 ist dies HCl.

Der HCl-Massenstrom im DG1-Strom muss 0,6 kg/h betragen um 3,6 kg des adsorbierten HCls, das während der Adsorptionszeit AT2 im Adsorber AD2 adsorbiert wurde, zu desorbieren.

| | |
|---|---|
| Volumen von DG: | 6 Nm$^3$/h |
| Temperatur von DG: | 150 °C |
| Druck von DG: | 1 bar(a) |

| DG-Komponenten | Massenstrom |
|---|---|
| N$_2$ | 7,0 kg/h |
| HCl | 0,6 kg/h |

| | |
|---|---|
| Volumenstrom von PG2: | 156 Nm$^3$/h |
| Temperatur von PG2: | 30 °C |
| Druck von PG2: | 1 bar(a) |

| PG2-Komponenten | Massenstrom |
|---|---|
| N$_2$ | 194,0 kg/h |
| HCl | 0,8 kg/h |
| DCM | 1,0 kg/h |

Üblicherweise würde die Kondensationstemperatur während des gesamten Prozesses so niedrig gewählt werden, dass der Adsorber AD1 am Ende der Adsorptionszeit TAT nicht vollständig beladen wäre. Im vorliegenden Beispiel beträgt die Kondensationstemperatur T-CU -151 °C um einen HCl- und DCM-Massenstrom von 0,3 kg/h zum Adsorber AD1 während der Adsorptionszeit TA2 zu erreichen. Der PG2-Strom wird im Kryokondensationsprozess CU auf eine Temperatur von -151 °C abgekühlt. Die Komponente DCM kondensiert bei dieser Temperatur vollständig, so dass der dem Adsorber AD1 zugeführte PG3b-Strom nunmehr die Komponenten HCl und N$_2$ enthält.

| | |
|---|---|
| Volumenstrom von PG3b: | 155,4 Nm$^3$/h |
| Temperatur von PG3b: | -151 °C |
| Druck von PG3b: | 1 bar(a) |

| PG3b-Komponenten | Massenstrom | Eisbildung in CU |
|---|---|---|
| N$_2$ | 194,0 kg/h | 0 kg/h |
| HCl | 0,3 kg/h | 0,49 kg/h |
| DCM | 0 kg/h | 0,07 kg/h |
| Kühlleistung: | | 10,4 kW |
| GAN-Temperatur: | | -20 °C |
| Benötigte Kühlmittelmenge (LIN): | | 110,0 kg/h bei 6 bar(a) und -172 °C |

| | |
|---|---|
| Nach 6 h Adsorption des PG3b-Stromes am Adsorber AD1: | |
| Gesamtmasse der VCs in AD1: | 1,8 kg |
| HCl-Masse in AD1: | 1,8 kg |
| DCM-Masse in AD1: | 0 kg |
| Eis in der CU: | 3,36 kg |

Nach 6 h Adsorption des PG3b-Stromes am Adsorber AD1 verbleibt folglich eine VC-Kapazität von 1,8 kg für die verbleibende, 6-stündige Adsorptionszeit TA1 des PG3a-Stromes. Die gewählte Kondensationstemperatur von -151 °C wird üblicherweise während der Adsorptionszeit TA1 nicht verändert.

| | | |
|---|---|---|
| Volumenstrom von PG3a: | 150 Nm³/h | |
| Temperatur von PG3a: | -151 °C | |
| Druck von PG3a: | 1 bar(a) | |

| PG3a-Komponenten | Massenstrom | Eisbildung in CU |
|---|---|---|
| $N_2$ | 187,0 kg/h | 0 kg/h |
| HCl | 0,1 kg/h | 0,10 kg/h |
| DCM | 0 kg/h | 0,07 kg/h |
| Kühlleistung: | | 9,7 kW |
| GAN-Temperatur | | -25 °C |
| Benötigte Kühlmittelmenge | (LIN): | 104,0 kg/h bei 6 bar(a) und -172 °C |

Nach 6 h Adsorption des PG3a-Stromes am Adsorber AD1:

| | |
|---|---|
| Gesamtmasse der VCs in AD1: | 0,6 kg |
| HCl-Masse in AD1: | 0,6 kg |
| DCM-Masse in AD1: | 0 kg |
| Eis in der CU: | 1,02 kg |

Addiert man die Ergebnisse der jeweils 6-stündigen Adsorptionszeiten TA1 und TA2 (T-CU: -151 °C) ergibt sich:

| | |
|---|---|
| Gesamtmasse der VCs in AD1: | 2.4 kg |
| HCl-Masse in AD1: | 2.4 kg |
| DCM-Masse in AD1: | 0 kg |
| Eis in der CU: | 4,38 kg |
| Benötigte Kühlmittelmenge (LIN): | 1284,0 kg |

Am Ende der Adsorptionszeit TAT verbleibt im Adsorber AD1 folglich eine VC-Kapazität von 1,2 kg. Somit läuft der Gesamtprozess im Hinblick auf die Adsorption der Komponenten HCl und DCM kontinuierlich und problemlos ab. Die gewählte Kondensationstemperatur von -151 °C führt zu einer Eisbildung in dem Kryokondensationsprozess von 4,38 kg während der Adsorptionszeit TAT. Daher müssten bei dieser Prozessführung redundante Wärmetauscher vorgesehen werden.
Die benötigte Kühlmittelmenge an flüssigem Stickstoff beläuft sich auf 1284 kg.
Eine wesentliche Prozessverbesserung wird dann erreicht, wenn die Kondensationstemperatur T-CU zeitlich flexibel gehandhabt und ein- oder mehrmalig während der Gesamtadsorptionszeit TAT verändert wird.

Beispiel 3

Nunmehr wird die Kondensationstemperatur T-CUx während der 6-stündigen Adsorptionszeit TA1 von -151 °C auf -94 °C angehoben. Dies führt dazu, dass sich der VC-Massenstrom von 0,1 kg/h auf 0,3 kg/h im PG3a*-Strom erhöht.

| | |
|---|---|
| Volumenstrom von PG3a*: | 150 Nm³/h |
| Temperatur von PG3a*: | -94 °C |
| Druck von PG3a*: | 1 bar(a) |

| PG3a*-Komponenten | Massenstrom | Eisbildung in CU |
|---|---|---|
| $N_2$ | 187,0 kg/h | 0 kg/h |
| HC | 0,2 kg/h | 0 kg/h |
| DCM | 0,1 kg/h | 0 kg/h |
| GAN-Temperatur: | | -25 °C |
| Kühlleistung: | | 6,6 kW |
| Benötigte Kühlmittelmenge (LIN): | | 71,0 kg/h bei 6 bar(a) und -172 °C |

Nach 6 h Adsorption des PG3a*-Stromes am Adsorber AD1:

| | |
|---|---|
| Gesamtmasse der VCs in AD1: | 1,8 kg |
| HCl-Masse in AD1: | 1,2 kg |
| DCM-Masse in AD1: | 0,6 kg |
| Eis in der CU: | 0 kg |

Addiert man die Ergebnisse der jeweils 6-stündigen Adsorptionszeiten TA1 (T-CUx: -94 °C) und TA2 (T-CUx: -151 °C) ergibt sich; der Vergleich der in den Beispielen 2 und 3 dargestellten Verfahrensweisen offenbart die Vorteile der erfindungsgemäßen Verfahrensweise:

| | | Unterschied zu den Ergebnissen bei T-CU = -151 °C |
|---|---|---|
| Gesamtmasse der VCs in AD1: | 3,6 kg | +33,3 % |
| HCl-Masse in AD1: | 3,0 kg | +20 % |
| DCM-Masse in AD1: | 0,6 kg | kein DCM bei T-CU = -151 °C |
| Eis in der CU: | 3,36 kg | -23,3 % |
| Benötigte Kühlmittelmenge (LIN): | 1086,0 kg | -15,4 % |

Bei einer Kondensationstemperatur von -94 °C werden mit dem PG3a*-Strom 0,3 kg/h VCs zum Adsorber AD1 geführt. Die Adsorptionskapazität des Adsorbers von 3,6 kg VCs ist am Ende der Gesamtadsorptionszeit TAT zu 100 % genutzt. Der erfindungsgemäße Prozess mit einer zeitlich flexiblen Kondensationstemperatur nutzt daher die Adsorptionskapazität der Adsorber des nachgeschalteten Adsorptionsprozesses effektiver. Des Weiteren verringert sich die für den Kryokondensationsprozess erforderliche Kühlmittelmenge. Auch wird die Eisbildung in dem bzw. den Wärmetauschern des Kryokondensationsprozesses verringert. Im Falle des Beispieles 3 liegt die gewählte Kondensationstemperatur oberhalb der Gefrierpunkte der Komponenten HCl und DCM. Während der Adsorptionszeit TA1 kommt es somit nicht zur Eisbildung. Von besonderer Bedeutung ist der bei einer Kondensationstemperatur von -94 °C eintretende Enteisungseffekt, aufgrund dessen das während derjenigen Zeit, zu der die Kondensationstemperatur niedriger gewählt ist, gebildete Eis reduziert oder vollständig beseitigt wird. Aufgrund dieses Enteisungseffektes müssen nunmehr keine redundanten Wärmetauscher mehr vorgesehen werden. Die Investitionskosten des erfindungsgemäßen Verfahrens sind folglich signifikant niedriger.

Bei dem anhand des Beispieles 3 beschriebenen Verfahren wird die Kondensationstemperatur während der Gesamtadsorptionszeit TAT lediglich einmal geändert. Es sind jedoch auch Verfahrensweisen realisierbar, bei denen während der Gesamtadsorptionszeit TAT die Kondensationstemperatur mehrmals verändert wird.

Mit derartigen Verfahrensweisen lassen sich noch effektivere Reinigungsprozesse realisieren. Für alle Temperaturänderungen gilt, dass sichergestellt werden muss, dass die Gesamtmenge der an einem Adsorber adsorbierten VCs während der Gesamtadsorptionszeit TAT kleiner und gleich der VC-Kapazität des Adsorbers ist.

Diese Bedingung führt zu der nachfolgend wiedergegebenen, vereinfachten Gleichung:

$$\text{VCs zu AD1} = VC1(T1) * t1 + VC2(T2) * t2 + ..... + VCi(Ti) * ti < \text{VC-Kapazität von AD1}$$

$$\text{Nebenbedingung: } t1 + t2 + ..... + ti = TAT$$

wobei

VCi(Ti) = Massenstrom der VCs zu AD1 bei Kondensationstemperatur Ti in der CU

Ti = Kondensationstemperatur in der CU während der Zeitdauer ti

ti = Zeitdauer, während der eine Kondensationstemperatur Ti eingehalten wird

Die Kombination von hohen und niedrigen Kondensationstemperaturen, die selbstverständlich unterschiedlich lange andauern können, ermöglicht es, einen im Hinblick auf die Adsorption der flüchtigen organischen Bestandteile, die Eisbildung sowie den Kühlmittelverbrauch optimierten Reinigungsprozess zu schaffen.

Das erfindungsgemäße Verfahren zum Abtrennen flüchtiger organischer und/oder gasförmiger anorganischer Bestandteile aus einem diese Bestandteile enthaltenden Gasgemisch weist nunmehr gegenüber dem bekannten Stand der Technik eine Vielzahl von Vorteilen auf, die nachfolgend angeführt sind:

Die Kapazität des Adsorptionsprozesses bezüglich der flüchtigen organischen Bestandteile wird durch das Vorsehen einer an die Verfahrensparameter angepassten Kondensationstemperatur erhöht. Als Folge davon kann die Menge an Adsorptionsmittel(n) verringert werden und die Adsorber können kleiner dimensioniert werden. Somit lassen sich die Investitionskosten des Adsorptionsprozesses reduzieren.

Des Weiteren kann die benötigte Kühlmittelmenge für den Kryokondensationsprozess verringert werden. Die niedrigste Kondensationstemperatur muss nicht während des gesamten Prozesses eingehalten werden. Aufgrund niedrigerer Betriebskosten wird die Ökonomie des erfindungsgemäßen Verfahrens erhöht.

Durch die Vermeidung der unerwünschten Eisbildung in dem bzw. den Wärmetauschern des Kryokondensationsprozesses kann eine höhere Kühlleistung realisiert werden. Damit einhergehend können bei einer Vielzahl von Anwendungsfällen die bisher vorzusehenden, redundanten Wärmetauscher entfallen. Unter Umständen kann ein Enteisen des bzw. der Wärmetauscher auch zu denjenigen Zeiten stattfinden, zu denen mit höheren Kondensationstemperaturen gefahren wird.

Die für die Realisierung des erfindungsgemäßen Verfahrens erforderliche Steuerung ist im Vergleich zu den Steuerungen herkömmlicher Verfahren einfacher aufgebaut, da weder ein Umschalten zwischen einzelnen, redundanten Wärmetauschern noch ein Abtauen von Wärmetauschern erforderlich ist.

**Patentansprüche**

1. Verfahren zum Abtrennen flüchtiger organischer und/oder gasförmiger anorganischer Bestandteile aus einem flüchtige organische und/oder gasförmige anorganische Bestandteile enthaltenden Gasgemisch,

   - wobei dieses einem der Abtrennung der flüchtigen organischen und/oder gasförmiger anorganischer Bestandteile dienendem Kryokondensationsprozess und anschließend einem der Abtrennung der flüchtigen organischen und/oder gasförmigen anorganischen Bestandteile dienendem Adsorptionsprozess unterworfen wird,
   - wobei der Adsorptionsprozess in wenigstens zwei parallel angeordneten Adsorbern, die abwechselnd Adsorption- und Desorptionsphasen durchlaufen erfolgt und
   - das während einer Desorptionsphase durch einen Adsorber geführte, mit flüchtigen organischen und/oder gasförmiger anorganischer Bestandteile beladene Regeneriergas zumindest teilweise dem flüchtige organische und/oder gasförmige anorganische Bestandteile enthaltenden Gasgemisch vor dessen Zuführung in den Kryokondensationsprozess zugemischt wird,

   **dadurch gekennzeichnet, dass** die innerhalb des Kryokondensationsprozesses (CU) realisierte Kondensationstemperatur (T-CUx) variiert.

2. Verfahren nach Anspruch 1, **dadurch gekennzeichnet, dass** die innerhalb des Kryokondensationsprozesses (CU) realisierte Kondensationstemperatur (T-CUx) durch die Menge der in dem mit flüchtigen organischen und/oder gasförmigen anorganischen Bestandteilen beladenen Regeneriergas (DG1) enthaltenen flüchtigen organischen und/oder gasförmigen anorganischen Bestandteilen bestimmt wird.

3. Verfahren nach Anspruch 2, **dadurch gekennzeichnet, dass** die innerhalb des Kryokondensationsprozesses (CU) realisierte Kondensationstemperatur (T-CUx) neben dem Parameter "Menge der in dem mit flüchtigen organischen und/oder gasförmigen anorganischen Bestandteilen beladenen Regeneriergas (DG1)" von wenigstens einem weiteren Verfahrensparameter bestimmt wird.

4. Verfahren nach einem der vorhergehenden Ansprüche 1 bis 3, **dadurch gekennzeichnet, dass** die innerhalb des Kryokondensationsprozesses (CU) realisierte Kondensationstemperatur (T-CUx) während einer in dem Adsorptionsprozess realisierten Adsorptionsphase (TAT) ein- oder mehrmalig verändert wird.

**Geänderte Patentansprüche gemäss Regel 137(2) EPÜ.**

**1.** Verfahren zum Abtrennen flüchtiger organischer und/oder gasförmiger anorganischer Bestandteile aus einem flüchtige organische und/oder gasförmige anorganische Bestandteile enthaltenden Gasgemisch,

- wobei dieses einem der Abtrennung der flüchtigen organischen und/oder gasförmiger anorganischer Bestandteile dienendem Kryokondensationsprozess und anschließend einem der Abtrennung der flüchtigen organischen und/oder gasförmigen anorganischen Bestandteile dienendem Adsorptionsprozess unterworfen wird,
- wobei der Adsorptionsprozess in wenigstens zwei parallel angeordneten Adsorbern, die abwechselnd Adsorption- und Desorptionsphasen durchlaufen erfolgt und
- das während einer Desorptionsphase durch einen Adsorber geführte, mit flüchtigen organischen und/oder gasförmiger anorganischer Bestandteile beladene Regeneriergas zumindest teilweise dem flüchtige organische und/oder gasförmige anorganische Bestandteile enthaltenden Gasgemisch vor dessen Zuführung in den Kryokondensationsprozess zugemischt wird,

**dadurch gekennzeichnet, dass** die innerhalb des Kryokondensationsprozesses (CU) realisierte Kondensationstemperatur (T-CUx) durch die Menge der in dem mit flüchtigen organischen und/oder gasförmigen anorganischen Bestandteilen beladenen Regeneriergas (DG1) enthaltenen flüchtigen organischen und/oder gasförmigen anorganischen Bestandteilen bestimmt wird.

**2.** Verfahren nach Anspruch 1, **dadurch gekennzeichnet, dass** die innerhalb des Kryokondensationsprozesses (CU) realisierte Kondensationstemperatur (T-CUx) neben dem Parameter "Menge der in dem mit flüchtigen organischen und/oder gasförmigen anorganischen Bestandteilen beladenen Regeneriergas (DG1)" von wenigstens einem weiteren Verfahrensparameter bestimmt wird.

**3.** Verfahren nach Anspruch 1 oder 2, **dadurch gekennzeichnet, dass** die innerhalb des Kryokondensationsprozesses (CU) realisierte Kondensationstemperatur (T-CUx) während einer in dem Adsorptionsprozess realisierten Adsorptionsphase (TAT) ein- oder mehrmalig verändert wird.

PG1　　　　　PG1　　　　　　　　PG3a

CU

AD1　　　　　　　　AD2

GAN　　　　　　　　LIN

CON

Fig. 1

PG4a

DG1

PG1　　　　　PG2　　　　　　　　PG3b

DG

CU

AD1　　　　　　　　AD2

GAN　　　　　　　　LIN

HE

DGAN

CON

Fig. 2

PG4b

Europäisches
Patentamt

European
Patent Office

Office européen
des brevets

**EUROPÄISCHER RECHERCHENBERICHT**

Nummer der Anmeldung

EP 09 01 6093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 473 071 A1 (AIR PROD & CHEM [US]) 3. November 2004 (2004-11-03) | 1,4 | INV. B01D53/00 |
| A | * Ansprüche 1,3,7,8; Abbildung 1 * ----- | 2-3 | B01D53/04 F25J3/06 |
| X | FR 2 891 538 A1 (AIR LIQUIDE [FR]) 6. April 2007 (2007-04-06) | 1,4 | |
| A | * Ansprüche 1,5,7; Abbildung 1 * ----- | 2-3 | |
| X | US 3 691 779 A (MEISLER JOSEPH ET AL) 19. September 1972 (1972-09-19) * Ansprüche 1,5; Abbildung 1 * ----- | 1,4 | |
| A | US 3 838 553 A (DOHERTY K) 1. Oktober 1974 (1974-10-01) * Abbildung 2; Beispiele 2,3 * ----- | 1-4 | |
| E | WO 2010/018548 A1 (AIR LIQUIDE [FR]; GROVER BHADRA S [US]) 18. Februar 2010 (2010-02-18) * Anspruch 1; Abbildung 1 * ----- | 1,4 | |
| A | FR 2 755 873 A1 (AIR LIQUIDE [FR]) 22. Mai 1998 (1998-05-22) * Abbildungen 1-3 * ----- | 1-4 | RECHERCHIERTE SACHGEBIETE (IPC) B01D F25J |

Der vorliegende Recherchenbericht wurde für alle Patentansprüche erstellt

| Recherchenort | Abschlußdatum der Recherche | Prüfer |
|---|---|---|
| München | 26. März 2010 | de Biasio, Arnaldo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 01 6093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2010

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1473071 | A1 | 03-11-2004 | AT | 386584 | T | 15-03-2008 |
| | | | DE | 60319204 | T2 | 05-06-2008 |
| | | | ES | 2301725 | T3 | 01-07-2008 |
| | | | PT | 1473071 | E | 11-03-2008 |
| | | | SI | 1473071 | T1 | 30-06-2008 |
| | | | US | 2004261451 | A1 | 30-12-2004 |
| FR 2891538 | A1 | 06-04-2007 | AT | 423078 | T | 15-03-2009 |
| | | | CA | 2623298 | A1 | 05-04-2007 |
| | | | CN | 101277898 | A | 01-10-2008 |
| | | | EP | 1934136 | A2 | 25-06-2008 |
| | | | WO | 2007036660 | A2 | 05-04-2007 |
| | | | US | 2009166258 | A1 | 02-07-2009 |
| US 3691779 | A | 19-09-1972 | DE | 2064151 | A1 | 15-07-1971 |
| | | | FR | 2072101 | A5 | 24-09-1971 |
| | | | GB | 1292180 | A | 11-10-1972 |
| US 3838553 | A | 01-10-1974 | AU | 465601 | B2 | 18-10-1973 |
| | | | AU | 4116772 | A | 18-10-1973 |
| | | | CA | 1010794 | A1 | 24-05-1977 |
| | | | DD | 95859 | A5 | 20-02-1973 |
| | | | DE | 2218799 | A1 | 02-11-1972 |
| | | | FR | 2133871 | A5 | 01-12-1972 |
| | | | GB | 1381112 | A | 22-01-1975 |
| | | | IT | 957647 | B | 20-10-1973 |
| | | | JP | 56027285 | B | 24-06-1981 |
| | | | NL | 7205347 | A | 24-10-1972 |
| | | | PL | 83699 | B1 | 31-12-1975 |
| | | | ZA | 7202429 | A | 31-01-1973 |
| WO 2010018548 | A1 | 18-02-2010 | US | 2010037655 | A1 | 18-02-2010 |
| FR 2755873 | A1 | 22-05-1998 | KEINE | | | |

EPO FORM P0461

Für nähere Einzelheiten zu diesem Anhang : siehe Amtsblatt des Europäischen Patentamts, Nr.12/82